# EUROPEAN PATENT APPLICATION

(11) **EP 4 624 383 A1**
(43) Date of publication of application: **01.10.2025**
(21) Application number: 25164458.9
(22) Date of filing: 18.03.2025
(51) Int. Cl.: B65G 43/10, B65G 47/26, B65G 47/31, B65G 47/68

(54) **METHOD OF CONTROLLING AN ACCUMULATION CONVEYOR**

(30) Priority: 19.03.2024 US 202418609045
(71) Applicant: SICK AG, 79183 Waldkirch (DE)
(72) Inventor: Bechtel, Robert, Minneapolis, MN 55418 (US); Fussy, Matthew, Edina, MN555435 (US)

(57) **Abstract**

A method of controlling an accumulation conveyor is provided. For each of a plurality of zones of the accumulation conveyor, the presence of an object is detected with a sensor associated with the zone. A long object mode is entered when the object is detected by the sensor in the zone and by the sensor in the upstream adjacent zone. When in the long object mode, instead of outputting a signal representative of whether the sensor is blocked or clear, a signal is output representing the drive state of the drive unit associated with the zone. In the long object mode, the drive unit of the upstream adjacent one of the zones receives the signal and matches the drive state.

## Description

The disclosure of the present patent application relates to the control of accumulation conveyors, and particularly to a method of controlling an accumulation conveyor which varies operation dependent upon detection of short or long objects on the accumulation conveyor.

An accumulation conveyor is a type of conveyor which is divided into segments or "zones". Each zone is individually driven, thus allowing conveyed products to stop or "accumulate" within a selected individual zone. Accumulation conveyors are commonly used to stage product. For example, in warehouse and distribution applications, accurnuliation conveyors can be used to create a gap between products moving downstream from a picking station to a packing station, and ultimately ending up in the shipping department. Although accumulation conveyors are very effective for relatively short products (on the order of the length of one zone or less), relatively long products (longer than the length of one zone) can often become stuck. This can lead to a jam on the conveyor, potentially damaging the conveyed products and typically requiring human interaction to clear the jam. Thus, a method of controlling an accumulation conveyor solving the aforementioned problems is desired.

In a typical accumulation conveyor, each zone of the conveyor has a sensor and a motor or other type of driver associated therewith, and each sensor outputs its state to the local controller associated with that zone, and that local controller outputs the sensor state to the local controller of the upstream adjacent zone, which has an input for receiving the sensor state from its downstream adjacent zone. As a non-limiting example, when an optical sensor of a zone is "blocked" (i.e., the optical beam or path of the optical sensor is broken, indicating the presence of an object), the local controller of the zone may output a low signal to the local controller of the upstream adjacent zone, indicating the zone's sensor is blocked. Similarly, when the optical sensor of the zone is "clear" (i.e., the optical beam or path of the optical sensor is unbroken, indicating that no object is present in the zone), the local controller of the zone may output a high signal to the local controller of the upstream adjacent zone, indicating the zone's sensor is clear. In this non-limiting example of a typical accumulation conveyor, if the local controller of the upstream adjacent zone receives a low signal, it may stop its driver to prevent delivery of another object until the controller receives the high "clear" signal.

In the present method of controlling an accumulation conveyor, for each of a plurality of zones of the accumulation conveyor, the presence of an object is detected with a sensor associated with the zone. A long object mode is entered when the object is detected by the sensor in the zone and by the sensor in the upstream adjacent zone. When in the long object mode, instead of the local controller outputting a signal representative of whether the sensor is blocked or clear, the local controller outputs a signal representing the drive state of a drive unit associated with the zone. In the long object mode, the local controller of the upstream adjacent one of the zones receives the signal and controls its own drive unit to match the drive state of the downstream adjacent zone's drive unit. It should be understood that the drive unit may be any suitable type of driver for driving the zone to move objects. Non-limiting examples of typical drive units include motors, pneumatic drives and actuators, linear-to-rotational actuators and the like. In addition to the local controller outputting the sensor state to the local controller of the upstream adjacent zone, the local controller may also output the sensor state to the local controller of the downstream adjacent zone.

Corresponding to the above non-limiting example of the present method, if the zone's drive unit is running, a high signal may be output to the upstream adjacent zone which the local controller of the upstream adjacent zone will interpret as in conventional operation; i.e., that the optical sensor of the zone is "clear" and the zone is ready to receive another object. Thus, the local controller of the upstream adjacent one of the zones receives the signal and causes its own drive unit to match the drive state so that it is also running. Similarly, in this non-limiting example, if the zone's drive unit is not running, a low signal may be output to the local controller of the upstream adjacent zone which the local controller of the upstream adjacent zone will interpret as in conventional operation; i.e., that the optical sensor of the zone is "blocked" and the zone is not ready to receive another object. Thus, the local controller of the upstream adjacent one of the zones receives the signal and causes its own drive unit to match the drive state so that it stops running. The drive state is only transmitted to the local controller of the upstream adjacent zone during the long object mode. When the zone is not in the long object mode, its local controller returns to transmitting its sensor state of "clear" or "blocked" to the local controller of the upstream adjacent zone, as in conventional accumulation conveyor operation.

For each zone, as a non-limiting example, there may be seven possible states: "empty" (not in the long object mode and no object is detected in the zone or in the upstream adjacent zone); "upstream detected" (not in the long object mode and an object is detected by the sensor of the upstream adjacent zone but is not detected by the zone's sensor); "long object" (the sensors of the zone and the upstream adjacent zone detect an object, thus entering the long object mode; in the "long object" state, both sensors are blocked, the upstream sensor was blocked first, and the upstream sensor did not clear before the downstream sensor was blocked); "long object upstream clear" (in the long object mode, the sensor of the zone detects the object but the sensor of the upstream adjacent zone no longer detects the object), "long object upstream detected" (in the long object mode, an object is detected by the sensor of the upstream adjacent zone but is not detected by the zone's sensor; in the "long object upstream detected" state, the upstream sensor cleared and then was blocked again while the zone's sensor never cleared; both sensors are blocked in this state); "short object" (not in the long object mode and an object is detected by the zone's sensor); and "short object upstream detected" (not in the long object made and an object is detected by the sensor of the upstream adjacent zone but is not detected by the zone's sensor; in the "short object upstream detected" state, both sensors are blocked, and the zone's sensor blocked before the upstream zone's sensor; both sensors are blocked in this state). Although seven states are described above with respect to this non-limiting example, it should be understood that additional or fewer states may be utilized within the scope of the present inventive method.

Additionally, each of the zones of the accumulation conveyor may enter a sleep state after expiration of a preset first time period during which the sensor associated with the zone does not detect an object. During the sleep state, the drive unit associated with the zone is turned off. Each of the zones may then be woken into a wake state, following the sleep state, when the sensor associated with the upstream adjacent zone detects an object. A waking signal is transmitted to the drive unit associated with the zone to turn on during the wake state. For the first one of the zones of the accumulation conveyor (i.e., the entry zone or most upstream of all of the zones, which has no upstream adjacent zone of its own), the wake state may be entered, following the sleep state, when the sensor associated with the first one of the zones detects an object.

Further, each of the zones of the accumulation conveyor may enter a jam state after expiration of a preset second time period during which the sensor associated with the zone continuously detects an object; i.e. , the object remains within the zone, blocking the sensor, during the entire second time period. This continuous blocking of the sensor indicates that the accumulation conveyor is jammed and the local controller associated with the zone should run its jam algorithm. When in the long object mode, the turning off of the drive unit in the zone will result in each of the successive upstream zones which also contain the long object to also have their drive units turned off. The jam state will persist until the jam is cleared and the sensor in the zone is cleared.

These and other features of the present subject matter will become readily apparent upon further review of the following specification.
Figs. 1A, 1B, 1C, 1D, 1E and 1F illustrate successive steps of a non-limiting example of the method of controlling an accumulation conveyor.
Figs. 2A, 2B, 2C, 2D, 2E, 2F, 2G, 2H and 2I illustrate successive steps of another non-limiting example of the method of controlling an accumulation conveyor.
Fig. 3 is a block diagram illustrating system components for performing the method of controlling an accumulation conveyor.
Fig. 4 is a block diagram illustrating an alternative embodiment of the system components for performing the method of controlling an accumulation conveyor.

Similar reference characters denote corresponding features consistently throughout the attached drawings.

As discussed above, in a typical accumulation conveyor, each zone of the conveyor has a sensor and a drive unit associated therewith, and each sensor outputs its state to the local controller associated with that zone, and that local controller outputs the sensor state to the local controller of the upstream adjacent zone, which has an input for receiving the sensor state from its downstream adjacent zone. As a non-limiting example, when an optical sensor of a zone is "blocked" (i.e., the optical beam or path of the optical sensor is broken, indicating the presence of an object), the local controller of the zone may output a low signal to the local controller of the upstream adjacent zone, indicating the zone's sensor is blocked. Similarly, when the optical sensor of the zone is "clear" (i.e., the optical beam or path of the optical sensor is unbroken, indicating that no object is present in the zone), the local controller of the zone may output a high signal to the local controller of the upstream adjacent zone, indicating the zone's sensor is clear. In this non-limiting example of a typical accumulation conveyor, if the local controller of the upstream adjacent zone receives a low signal it may stop its drive unit to prevent delivery of another object until the local controller receives the high "clear" signal.

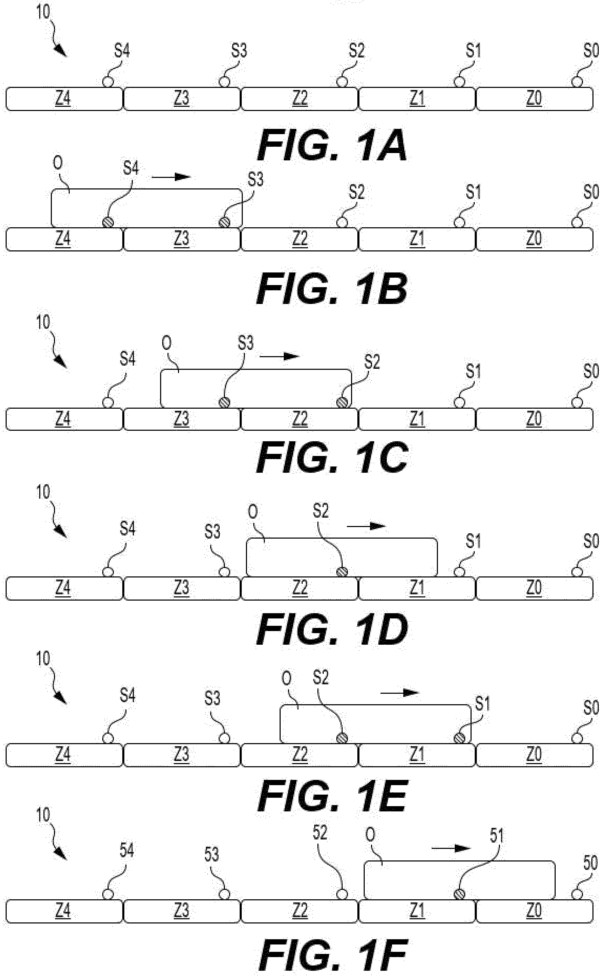

In the present method of controlling an accumulation conveyor, for each of a plurality of zones of the accumulation conveyor, the presence of an object in the zone is detected with a sensor associated with the zone. In the non-limiting example of Figs. 1A-1F, accumulation conveyor 10 includes five zones Z4-Z0, each having its own drive unit (not shown) and sensor S4-S0, respectively. In the non-limiting example of Figs. 1A-1F, accumulation conveyor 10 is divided into five zones, however, it should be understood that this relatively short accumulation conveyor is shown for exemplary purposes only and that the present method may be applied to an accumulation conveyor having any desired number of zones. Additionally, it should be understood that sensors S4-S0 may be any suitable type of sensors for detecting the presence of an object, such as optical sensors or the like.

In general, a long object mode is entered when the object is detected by the sensor in the zone and by the sensor in the upstream adjacent zone. The specific non-limiting example of Figs. 1A-1F will be discussed in greater detail below with regard to the long object mode. In general, when in the long object mode, instead of the local controller of the zone outputting a signal representative of whether the sensor is blocked or clear (to the upstream adjacent zone), the local controller outputs a signal representing the drive state of the drive unit associated with the zone (to the upstream adjacent zone; the downstream output still indicates sensor state). In the long object mode, the local controller of the upstream adjacent one of the zones receives the signal and causes its own drive unit to match the drive state of the downstream adjacent zone's drive unit. **It** should be understood that the drive unit may be any suitable type of driver for driving the zone to move objects. Non-limiting examples of typical drive units include motors, pneumatic drives and actuators, linear-to-rotational actuators and the like. In addition to the local controller outputting the sensor state to the local controller of the upstream adjacent zone, the local controller also outputs the sensor state to the local controller of the downstream adjacent zone.

Corresponding to the above non-limiting example involving high and low signal outputs from each sensor, if the zone's drive unit is running, a high signal may be output to the upstream adjacent zone which the local controller of the upstream adjacent zone will interpret as in conventional operation; i.e., that the optical sensor of the zone is "clear" and that the zone is ready to receive another object. Thus, the local controller of the upstream adjacent one of the zones receives the signal and causes its own drive unit to match the drive state so that it is also running. Similarly, in this non-limiting example, if the zone's drive unit is not running, a low signal may be output to the local controller of the upstream adjacent zone, which the local controller of the upstream adjacent zone will interpret as in conventional operation; i.e., that the optical sensor of the zone is "blocked" and the zone is not ready to receive another object. Thus, the local controller of the upstream adjacent one of the zones receives the signal and causes its own drive unit to match the drive state so that it stops running. The drive state is only transmitted to the local controller of the upstream adjacent zone during the long object mode. When the zone is not in the long object mode, its local controller returns to transmitting its sensor state of "clear" or "blocked" to the local controller of the upstream adjacent zone, as in conventional accumulation conveyor operation. It should be understood that the high and low signal representations may be reversed.

For each zone, as a non-limiting example, there may be seven possible states: "empty" (not in the long object inode and no object is detected in the zone or in the upstream adjacent zone); "upstream detected" (not in the long object mode and an object is detected by the sensor of the upstream adjacent zone but is not detected by the zone's sensor); "long object" (the sensors of the zone and the upstream adjacent zone detect an object, thus entering the long object mode; in the "long object" state, both sensors are blocked, the upstream sensor was blocked first, and the upstream sensor did not clear before the downstream sensor was blocked); "long object upstream clear" (in the long object mode, the sensor of the zone detects the object but the sensor of the upstream adjacent zone no longer detects the object); "long object upstream detected" (in the long object mode, an object is detected by the sensor of the upstream adjacent zone but is not detected by the zone's sensor; in the "long object upstream detected" state, the upstream sensor cleared and then was blocked again while the zone's sensor never cleared; both sensors are blocked in this state); "short object" (not in the long object mode and an object is detected by the zone's sensor); and "short object upstream detected" (not in the long object made and an object is detected by the sensor of the upstream adjacent zone but is not detected by the zone's sensor; in the "short object upstream detected" state, both sensors are blocked, and the zone's sensor blocked before the upstream zone's sensor; both sensors are blocked in this state). Although seven states are described above with respect to this non-limiting example, it should be understood that additional or fewer states may be utilized within the scope of the present inventive method.

Additionally, each of the zones of the accumulation conveyor may enter a sleep state after expiration of a preset first time period during which the sensor associated with the zone does not detect an object. During the sleep state, the drive unit associated with the zone is turned off. Each of the zones may then be woken into a wake state, following the sleep state, when the sensor associated with the upstream adjacent zone detects an object. A waking signal is then transmitted to the drive unit associated with the zone to turn on during the wake state. For the first one of the zones of the accumulation conveyor (i.e., the entry zone or most upstream of all of the zones, which has no upstream adjacent zone of its own), the wake state may be entered, following the sleep state, when the sensor associated with the first one of the zones detects an object.

Further, each of the zones of the accumulation conveyor may enter a jam state after expiration of a preset second time period during which the sensor associated with the zone continuously detects an object; i.e., the object remains within the zone, blocking the sensor, during the entire second time period. This continuous blocking of the sensor indicates that the accumulation conveyor is jammed and the local controller associated with the zone should run its jam algorithm to clear the jam. When in the long object mode, the turning off of the drive unit in the zone will result in each of the successive upstream zones which also contain the long object to also have their drive units turned off. The jam state will persist until the jam is cleared and the sensor in the zone is cleared.

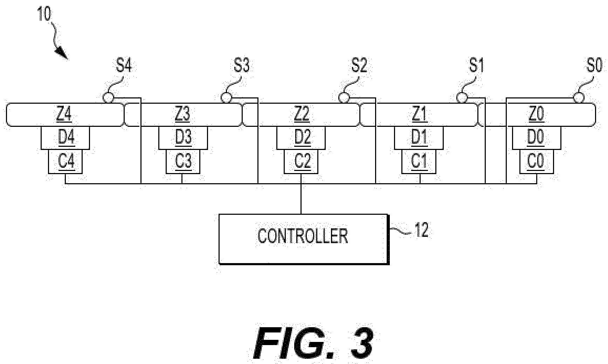

It should be understood that, in one embodiment, the control over signal transmission, as well as the processing and determination steps, may be performed by individual local controllers C0-C4 respectively associated with zones Z0-Z4 (as shown in Fig. 3), either alone or in conjunction with a central controller 12, as is common for conventional accumulation conveyors. For example, when the sensors of two adjacent zones detect the presence of an object, a determination that the object is a "long object" may be made by the central controller 12 in communication with the sensor and drive unit of each zone. Typically, the transmission of operational signals for each drive unit may be performed and/or controlled by the local controller C0-C4 for that particular zone, although the central controller 12 may be used to perform high level monitoring and control. As illustrated in Fig. 3, the drive units D4-D0 and sensors S4-S0 of zones Z4-Z0, respectively, may be in communication with central controller 12 and also their respective local controllers C0-C4. It should be understood that communication can be wired or wireless, and may take place over any suitable type of bus and/or other conventional interfaces and circuitry. It should be further understood that controller 12 and each individual zone controller C0-C4 may be any suitable type of controller, such as, but not limited to, a processor, a programmable logic controller, control circuitry, a computer or the like.

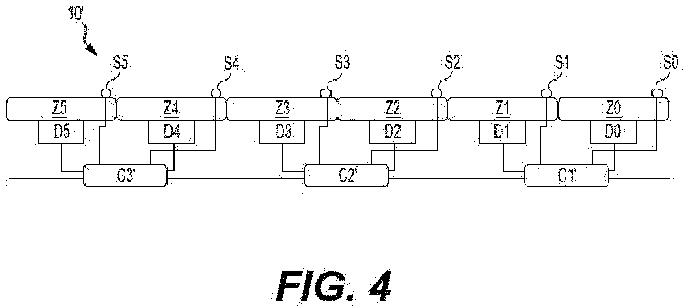

In the embodiment shown in Fig. 4, accumulation conveyor 10' is similar to accumulation conveyor 10 of the previous embodiment, but is shown with an exemplary additional zone Z5, for purposes of illustration. Additional zone Z5 includes a corresponding sensor S5 and drive unit D5, similar to the drive units D4-D0 and sensors S4-S0 of zones Z4-Z0 discussed above with respect to the previous embodiment. However, as shown in Fig. 4, a controller is provided for each pair of zones. In the non-limiting example of Fig. 4, controller C1' controls zones Z0 and Z1 through its connection with sensor S0, drive unit D0, sensor S1 and drive unit D1. Similarly, controller C2' controls zones Z2 and Z3 through its connection with sensor S2, drive unit D3, sensor S3 and drive unit D3, and controller C3' controls zones Z4 and Z5 through its connection with sensor S4, drive unit D4, sensor S5 and drive unit D5. The controllers C1', C2" and C3' of system 10' are chained together to form the conveyor. It should be understood that this configuration is shown for exemplary purposes only and one controller could be used to control three, four or more zones.

Returning to Figs. 1A-1F, reference is specifically made to zone Z2. In Fig. 1A, no object has been placed on the accumulation conveyor 10. Assuming that the preset first time period has expired, each of zones Z4-Z0 is in the sleep state and all of the drive units are off. In Fig. 1A, the state of zone Z2 is "empty". In Figs. 1A-1F, zone Z4 is the most upstream zone and zone Z0 is the most downstream zone. In Fig. 1B, an object O has been placed on the accumulation conveyor 10. When sensor S4 of zone Z4 initially detects object O, zone Z4 enters the wake state and the drive unit of zone Z4 is turned on. The wake signal is transmitted to the local controller of zone Z3, which causes zone Z3 to enter the wake state and the drive unit of zone Z3 is turned on. Additionally, sensor S3 of zone Z3 detects the presence of object O, thus the wake signal is transmitted to the local controller of zone Z2 to turn its drive unit on. Since the object O has been detected in zone Z3, the state of zone Z2 is "upstream detected"

In Fig. 1C, sensors S3, and S2 of zones Z3 and Z2, respectively, both detect the presence of object O, thus initiating the long object mode for zone Z2. The state of zone Z2 in Fig. 1C is "long object". Additionally, since sensor S2 of zone Z2 detects the presence of object O, the wake signal is transmitted to the local controller of zone Z1 to turn its drive unit on. In Fig. 1D, the object O is still detected within zone Z2 by sensor S2, however, the object O has cleared the sensor S3 of zone Z3. Thus, the state of zone Z2 in Fig. 1D is "long object upstream clear".

It is important to note that, in the above, zone Z2 was in the "upstream detected" state, then its local sensor became blocked. This triggered zone Z2's transition to the "long object" state. The local controller of zone Z2 became aware of sensor S3 being blocked and then became aware of sensor S2 blocking without sensor S3 clearing. If sensor S3 cleared (transitioning zone Z2 back to "empty"), then sensor S2 blocked (zone Z2 would now be in "short object"), then sensor S3 blocked (without sensor S2 clearing), then zone Z2 would enter the "short object upstream detected" state. Thus, both sensors S2 and S3 would be blocked simultaneously, but this would not be in the "long object" mode. The sequence of how the sensors are blocked is important, and the different states of the zones capture the sequencing.

In Fig. 1E, the object O is still detected within zone Z2 by sensor S2 and is also detected by sensor S1 of zone Z1. Since sensor S3 of zone Z3 remains clear, the state of zone Z2 remains "long object upstream clear". However, zone Z1 now enters the long object mode (with a state of "long object") and, since sensor Z1 detects object O, the wake signal is transmitted to the local controller of zone Z0. In Fig. 1F, the object is no longer detected by sensor S2 of zone Z2, thus zone Z2 now has a state of "empty". Zone Z1 now has the state "long object upstream clear" and zone Z0 is in the state "upstream detected".

It should be understood that Figs. 1A-1F are intended to show a non-limiting example of a middle portion of a generic accumulation conveyor. In this non-limiting example, it is assumed that object O was previously conveyed to this middle portion of the conveyor and not just placed on the conveyor. Thus, in this non-limiting example, zone Z4 is not intended to be the very first zone of the conveyor (commonly referred to as the "charge" zone or "in-feed" zone). If zone Z4 was a charge zone, there would typically be an additional sensor placed at the entrance of zone Z4 (on the far left in the orientation of Figs. 1A-1F). When this additional sensor was blocked, zone Z4 would then be triggered to wake up.

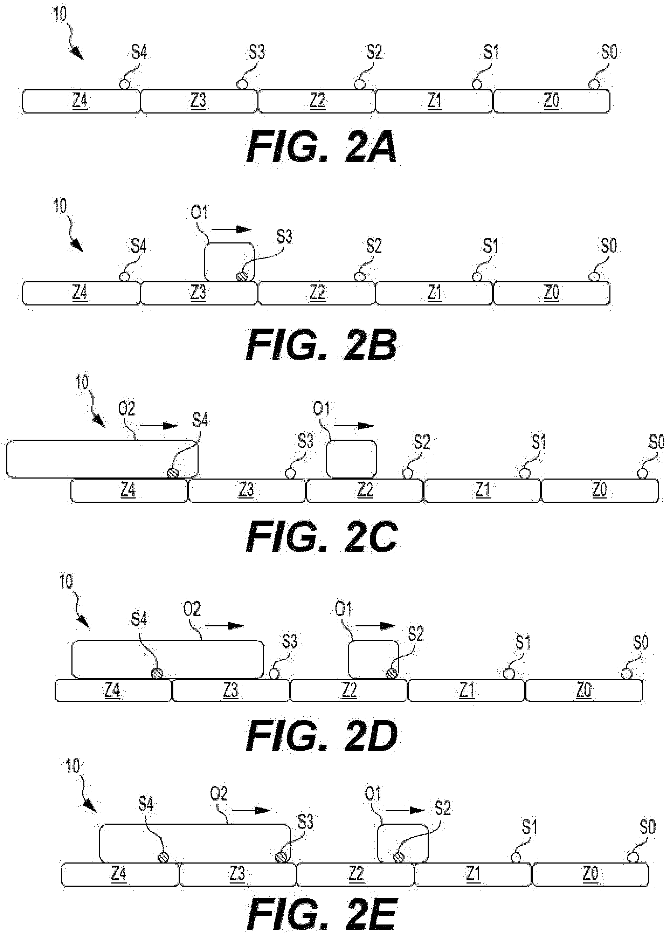

Figs. 2A-2I illustrate a more complex example involving two different objects O1 and O2 having different sizes. Reference is again made to zone Z2. In Fig. 2A, no object has been placed on the accumulation conveyor 10. Assuming that the preset first time period has expired, each of zones Z4-Z0 is in the sleep state and all of the drive units are off. In Fig. 2A, the state of zone Z2 is "empty". In Fig. 2B, first object O1 has been placed on the accumulation conveyor 10. When sensor S4 of zone Z4 initially detects object O1, zone Z4 enters the wake state and the drive unit of zone Z4 is turned on. The wake signal is transmitted to the local controller of zone Z3 so that zone Z3 enters the wake state and the drive unit of zone Z3 is turned on. In the example of Figs. 2A-2I, the first object O1 is a short object and no adjacent pair of sensors detects its presence at the same time. In Fig. 2B, sensor S4 no longer detects the presence of first object O1 and sensor S3 alone detects its presence. The wake signal is sent to the local controller of zone Z2 and zone Z2 also enters the "upstream detected" state. In Fig. 2C, a second object O2 is added to the accumulation conveyor 10. The second object O2 is a long object, however, in Fig. 2C, only sensor S4 has detected its presence. At this stage, the first object O1 is between sensors S3 and S2 of zones Z3 and Z2, respectively, and zone Z2 is in the "empty" state.

In Fig. 2D, object O2 has still only been detected by sensor S4, thus no zone is in the long object mode yet. The sensor S2 of zone Z2 detects the first object O1 and the wake signal is transmitted to the local controller of zone Z1. Zone Z2 is in the "short object" state. In Fig. 2E, the second object O2 is now detected by sensors S4 and S3 of zones Z4 and Z3, indicating a long object. Zone Z2, however, is still in the conventional short object mode. Since the second object O2 has been detected by sensor S3 of zone Z3, zone Z2 is in the "short object upstream detected" state.

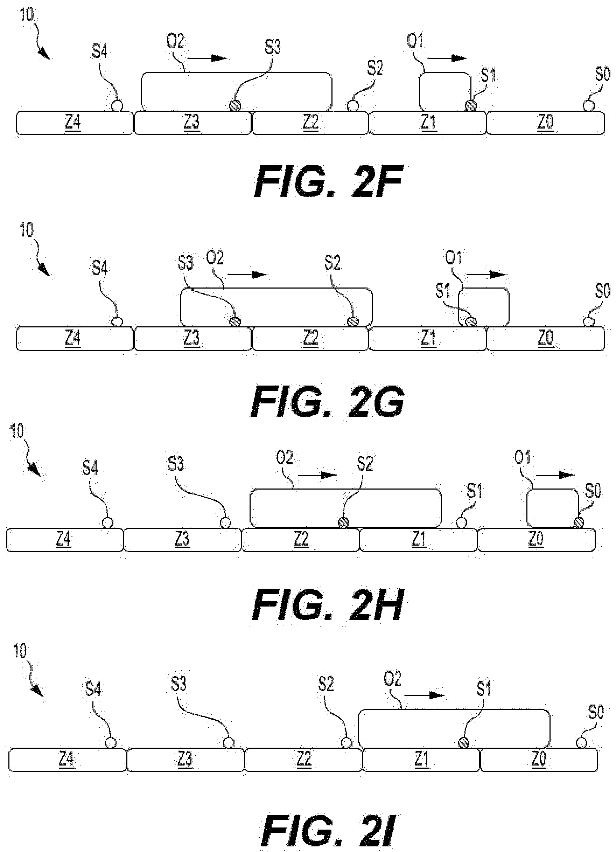

In Fig. 2F, the first object O1 is detected by sensor S1 of zone Z1, thus a wake signal is transmitted to the local controller of zone Z0. The second object O2 is detected only by sensor S3 of zone S3, thus zone Z2 is in the "upstream detected" state. In Fig. 2G, the second object is detected by sensors S3 and S2 of zones Z3 and Z2, respectively, and zone Z2 enters the "long object" state.

In Fig. 2H, the long object O2 is only detected by sensor S2 of zone Z2 and the first object has just been detected by sensor S0 of zone Z0. Since the second object O2 is not detected by sensor S3 of zone Z3, zone Z2 now enters the "long object upstream clear" state. In Fig. 2I, the first object O1 has cleared zone Z0 and the second object is now detected only by sensor S1 of zone Z1. Zone Z2 is now in the "empty" state and zone Z1 is in the "long object upstream clear" state. Zone Z0 is in the "upstream detected" state. Similar to Figs. 1A-1F discussed above, it should be understood that Figs. 2A-2I are intended to show a non-limiting example of a middle portion of a generic accumulation conveyor.

It is to be understood that the method of controlling an accumulation conveyor is not limited to the specific embodiments described above, but encompasses any and all embodiments within the scope of following claims enabled by the embodiments described herein, or otherwise shown in the drawings or described above in terms sufficient to enable one of ordinary skill in the art to make and use the claimed subject matter.

## Claims

1. A method of controlling an accumulation conveyor, comprising:
for each of a plurality of zones of the accumulation conveyor:
detecting a presence of an object with a sensor associated with the zone;
entering a long object mode when the object is detected by the sensor in the zone and by the sensor in an upstream adjacent one of the zones;
in the long object mode, outputting a signal representing a drive state of a drive unit associated with the zone; and
in the long object mode, the drive unit of the upstream adjacent one of the zones matching the drive state.

2. The method of controlling an accumulation conveyor according to claim 1, further comprising outputting a signal representative of a sensor state associated with the zone.

3. The method of controlling an accumulation conveyor according to claim 1 or 2, further comprising a controller associated with the upstream adjacent one of the zones receiving the signal representative of the sensor state associated with the zone.

4. The method of controlling an accumulation conveyor according to any of the claims 1 to 3, further comprising a controller associated with a downstream adjacent one of the zones also receiving the signal representative of the sensor state associated with the zone.

5. An accumulation conveyor, comprising:
a plurality of zones, wherein each zone has a drive unit and a sensor associated therewith; and
a controller configured to:
detect a presence of an object with the sensor associated with each of the zones;
enter a long object mode when the object is detected by the sensor in one of the zones and by the sensor in an upstream adjacent one of the zones;
in the long object mode, output a signal representing a drive state of a drive unit associated with the one of the zones; and
in the long object mode, cause the drive unit of the upstream adjacent one of the zones to match the drive state.

6. The accumulation conveyor according to claim 5, wherein the controller is further configured to output a signal representative of a sensor state associated with the one of the zones.

7. The accumulation conveyor according to claim 5 or 6, further comprising an upstream controller associated with the upstream adjacent one of the zones configured to receive the signal representative of the sensor state associated with the one of the zones.

8. The accumulation conveyor according to any of the claims 5 to 7, further comprising a downstream controller associated with a downstream adjacent one of the zones configured to also receive the signal representative of the sensor state associated with the one of the zones.

9. The accumulation conveyor according to claims 5 or 6, wherein the controller is further associated with the upstream adjacent one of the zones and is further configured to receive the signal representative.

10. The accumulation conveyor according to any of the claims 5 to 6 or 9, wherein the controller is further associated with a downstream adjacent one of the zones configured to also receive the signal representative of the sensor state associated with the one of the zones.
